# EUROPÄISCHE PATENTSCHRIFT

(11) **EP 1 366 971 B1**
(45) Veröffentlichungstag und Bekanntmachung des Hinweises auf die Patenterteilung: **26.07.2006**
(21) Anmeldenummer: 03009095.5
(22) Anmeldetag: 19.04.2003
(51) Int. Cl.: B62D 53/08

(54) **Sattelzugmaschine**
Trailer tractor
Tracteur de semi-remorque

(30) Priorität: 27.05.2002 DE 10223612
(43) Veröffentlichungstag der Anmeldung: 03.12.2003
(73) Patentinhaber: MAFI Transport-Systeme GmbH, 97941 Tauberbischofsheim (DE)
(72) Erfinder: Sellen, Markus, 97956 Werbach-Wenkheim (DE)
(74) Vertreter: Kohler Schmid Möbus

(56) Entgegenhaltungen:
- EP-A- 0 968 906
- FR-A- 2 558 429
- GB-A- 1 119 183
- GB-A- 1 434 709
- US-A- 3 892 323
- US-A- 5 967 735

## Beschreibung

Die Erfindung betrifft eine Sattelzugmaschine mit einer Sattelplatte zum Ankuppeln eines Sattelaufliegers.

Sattelzugmaschinen zum Transport von Sattelaufliegern sind beispielsweise aus der DE 197 52 108 A1 bekannt.

Zum Transport von schweren oder voluminösen Lasten werden insbesondere im Straßenverkehr Sattelzugmaschinen eingesetzt, welche Sattelauflieger bewegen können. Eine Sattelzugmaschine besteht im Wesentlichen aus einem Führerhaus, einem Fahrzeugantrieb, lenkbaren und starr aufgehängten Rädern sowie einer Kupplungsvorrichtung im Bereich einer Sattelplatte, welche sich im hinteren Bereich der Sattelzugmaschine befindet. Ein Sattelauflieger besteht im Wesentlichen aus einem Ladebereich, in welchem die Nutzlast verstaut wird, einer Ankuppelvorrichtung in vorderen Bereich des Sattelaufliegers an dessen Unterseite sowie mehreren, meist starr aufgehängten Rädern im hinteren Bereich des Sattelaufliegers.

Im angekuppelten Zustand liegt der Sattelauflieger auf der Sattelplatte auf, wobei die Kupplungsvorrichtung und die Ankuppelvorrichtung eine Befestigung des Sattelaufliegers auf der Sattelplatte bewirken. Im nicht gekuppelten Zustand muss der vordere Teil eines Sattelaufliegers gestützt werden. Dies geschieht üblicherweise durch am Sattelauflieger integrierte Stützbeine.

Verbreitet ist weiterhin ein sogenannter Auto-Trestle, bestehend aus einem auf seinen Schenkeln stehenden U-förmigen Träger, welcher Befestigungsmöglichkeiten sowohl für den Sattelauflieger, welcher auf der Brücke des U-förmigen Trägers aufliegt, als auch für Bodenverankerungen an den Enden der Schenkel bietet. Auto-Trestles werden vor allem beim Seetransport auf Schiffen eingesetzt, um die Stauarbeiten, insbesondere das Lechen, zu beschleunigen und den Sattelauflieger gegen Verrutschen, etwa bei rauher See, zu sichern.

Um einen Sattelauflieger, dessen Unterfahrhöhe kleiner ist als die Sattelplattenhöhe der Zugmaschine (bzw. kleiner ist als die Höhe der Einheit von Zugmaschine und einem Auto-Trestle) ankuppeln zu können, ist es erforderlich, den Sattelauflieger im Bereich der Ankuppelvorrichtung anzuheben. Üblicherweise werden dazu die Stützbeine des Sattelaufliegers manuell hochgekurbelt. Dies erfordert viel Zeit und Muskelkraft. Bekannt ist es ebenfalls, externe Hubgeräte (etwa einen Kran) einzusetzen. Ein Kupplungsvorgang wird dadurch sehr aufwendig und erfordert die Verfügbarkeit des externen Hubgeräts. In beiden Fällen muss Fremdenergie beim Kupplungsvorgang eingesetzt werden. Nach dem Anheben des Sattelaufliegers fährt die Sattelzugmaschine unter den Sattelauflieger und kuppelt so den Sattelauflieger an.

Alternativ wird auch ein Keilauffahren durchgeführt: Sattelzugmaschine und/oder Sattelauflieger verfügen an ihrem rückwärtigen bzw. vorderen Ende über eine schräge Fläche, so dass ein Anheben des Sattelaufliegers während des Unterfahrens durch Keilwirkung erfolgt. In der Regel ist zur Durchführung des Keilauffahrens erheblicher Schwung (d.h. eine Mindestgeschwindigkeit) der Sattelzugmaschine erforderlich, was eine erhebliche Materialbelastung insbesondere durch plastische Verformung sowie eine Gefährdung von Ladung und Personal mit sich bringt.

Der vorliegenden Erfindung liegt die Aufgabe zugrunde, das Ankuppeln eines Sattelaufliegers an eine Sattelzugmaschine einfacher und sicherer durchführen zu können.

Diese Aufgabe wird durch eine Sattelzugmaschine der eingangs vorgestellten Art dadurch gelöst, dass an der Rückseite der Sattelzugmaschine eine Hubeinrichtung zum Anheben des Sattelaufliegers angebracht ist. Es wird ein einfaches und gefahrloses An- und Abkuppeln von Sattelaufliegern ermöglicht. Ein in der Sattelzugmaschine befindlicher Fahrer kann alle dafür notwendigen Maßnahmen steuern. Die Sattelzugmaschine ist durch die zusätzliche Hubeinrichtung für die Handhabung einer Vielzahl von Sattelaufliegern, insbesondere mit geringer Unterfahrhöhe, geeignet.

Zum Aufsatteln des Sattelaufliegers werden folgende Schritte durchlaufen:
- Die Sattelzugmaschine fährt an den Sattelauflieger heran, so dass die Zugmaschine und Sattelauflieger etwa in einer Linie stehen und die Rückseite der Sattelzugmaschine an die Vorderseite des Sattelaufliegers grenzt. In dieser Position überragt der Sattelauflieger die Hubeinrichtung der Sattelzugmaschine, wobei die Hubeinrichtung tiefer angebracht ist als die Unterfahrhöhe des Sattelaufliegers beträgt (Orientieren der Sattelzugmaschine);
- der Sattelauflieger wird von der Hubeinrichtung der Sattelzugmaschine angehoben, so dass die Unterkante des Sattelaufliegers auf die Höhe der Sattelplatte der Zugmaschine gelangt (Anheben des Sattelaufliegers);
- im angehobenen Zustand unterfährt die Sattelzugmaschine den Sattelauflieger, d.h. sie fährt rückwärts; dabei wird die Hubeinrichtung entlang der Unterseite des Sattelaufliegers verschoben (Unterfahren); nachdem der Königszapfen der Ankuppelvorrichtung des Sattelaufliegers in seine Endposition in der Kupplungsvorrichtung im Bereich der Sattelplatte der Sattelzugmaschine gelangt ist, wird der Königszapfen gesichert (Ankuppeln); danach wird die Hubeinrichtung wieder eingefahren.

Zum Absatteln werden diese Schritte umgekehrt durchlaufen. Sämtliche Schritte können vom Fahrer der Sattelzugmaschine vom der Fahrerkabine aus durchgeführt bzw. gesteuert werden. Zur Verbesserung der Sicht auf den Sattelauflieger, die Sattelplatte oder die Hubeinrichtung können Positionsmelder, insbesondere auch bildübertragende Systeme vorgesehen sein.

Besonders geeignet ist die erfindungsgemäße Zugmaschine zum Handhaben von Megatrailern, das sind großvolumige Sattelauflieger mit besonders niedriger Unterfahrhöhe (= Höhe der Unterkante des vorderen Endes des Sattelaufliegers). Aufgrund der Hubeinrichtung braucht die Sattelplattenhöhe nicht der Unterfahrhöhe der Megatrailer angepasst, d.h. tiefer gelegt zu werden. Typische Unterfahrhöhen von Megatrailern, die im Stand der Technik einer entsprechenden Sattelplattenhöhe der Sattelzugmaschine entsprechen, betragen dabei ca. 960 mm, was die Verwendung von kleineren, weniger belastbaren Reifen (Niederquerschnittsreifen) an der Sattelzugmaschine erfordert. Im Gegensatz dazu kann durch die Anwendung der Erfindung die normale Sattelplattenhöhe von über 1000 mm beibehalten werden. Dies ermöglicht die Verwendung von großen Reifen, insbesondere Standardreifen, die auch einer höheren Belastung sicher standhalten können. Dadurch wird die erfindungsgemäße Zugmaschine sowohl für Megatrailer als auch für konventionelle, für schwere Lasten geeignete Sattelauflieger einsetzbar.

Letztlich können auch schwere Megatrailer z 20 t durch die erfindungsgemäße Sattelzugmaschine bewegt werden.

Eine herkömmliche Sattelzugmaschine ist leicht mit einer Hubeinrichtung erfindungsgemäß nachrüstbar, so dass die Erfindung kostengünstig an bereits vorhandenen Sattelzugmaschinen einsetzbar ist.

Die Hubeinrichtung der erfindungsgemäßen Sattelzugmaschine kann beispielsweise mechanisch, elektromechanisch, pneumatisch oder hydraulisch arbeiten.

Besonders vorteilhaft ist eine Ausführungsform der erfindungsgemäßen Sattelzugmaschine, bei der die Hubeinrichtung eine obere Stützeinrichtung mit einem beweglich gelagerten oberen Übertragungsglied zum Kontakt mit der Unterseite des Sattelaufliegers aufweist. Das obere Übertragungsglied untergreift zunächst die Unterkante des vorderen Endes des Sattelaufliegers und wird dann nach oben bewegt, um den Sattelauflieger anzuheben. Im Anschluss daran fährt die Sattelzugmaschine unter den Sattelauflieger, wobei der Sattelauflieger im angehobenen Zustand verbleiben muss, bevorzugt auch unter Beibehaltung seiner vertikalen Position. Dazu gleitet das obere Übertragungsglied an der Unterseite des Sattelaufliegers entsprechend der Geschwindigkeit der Sattelzugmaschine entlang. Durch das obere Übertragungsglied kann also die vertikale und horizontale Position des Sattelaufliegers beim Unterfahren leicht beibehalten werden.

In einer vorteilhaften Ausführungsform weist die Hubeinrichtung eine untere Stützeinrichtung mit einem beweglich gelagerten unteren Übertragungsglied zum Kontakt mit der Fahrbahn auf. Im angehobenen Zustand des Sattelaufliegers wird so zumindest ein Teil der Stützlast auf die Hubeinrichtung über die untere Stützeinrichtung bzw. das untere Übertragungsglied auf den Untergrund (die Fahrbahn) übertragen. Dadurch wird beim Heben bzw. im angehobenen Zustand ein Drehmoment auf die Sattelzugmaschine, das zu einem Kippen der selbigen führen kann, reduziert und die Befestigung der Hubeinrichtung an der Sattelzugmaschine mechanisch entlastet. Das Drehmoment entsteht in Folge der Krafteinwirkung hinter der Hinterachse der Sattelzugmaschine. Während des Unterfahrens gleitet das untere Übertragungsglied auf der Fahrbahn entlang.

Besonders vorteilhaft ist weiterhin eine erfindungsgemäße Weiterbildung, bei der das obere und/oder das untere Übertragungsglied durch eine Rolle oder ein Rad ausgebildet sind. Durch die Ausbildung des oberen Übertragungsgliedes als Rolle oder Rad ist das Gleiten an der Unterseite des Sattelaufliegers während des Unterfahrens leicht möglich. Ebenso leicht möglich ist das Gleiten des unteren Übertragungsgliedes auf der Fahrbahn während des Unterfahrens. Das Gleiten wird hier jeweils durch ein Abrollen bewirkt. Erfindungsgemäß kann das obere Übertragungsglied auch mehrere Rollen oder Räder umfassen; genauso kann das untere Übertragungsglied auch mehrere Rollen oder Räder umfassen. Besonders bevorzugt sind Rollen oder Räder mit hohem Reibschlussbeiwert.

Eine Alternative zu den Rollen oder Rädern als Übertragungsglieder stellen Gleitflächen, insbesondere konvex geformte Metallflächen dar, die kostengünstiger sind als Rollen oder Räder.

In einer besonders vorteilhaften Weiterbildung ist die Bewegung der Übertragungsglieder der oberen und der unteren Stützeinrichtung synchronisiert. Im Regelfall wird eine Synchronisation 1:-1 gewählt, so dass der Abrollweg des oberen Übertragungsgliedes betragsgleich ist dem Abrollweg des unteren Übertragungsgliedes. Am einfachsten ist dies durch Räder mit gleichem Radius am oberen und unteren Übertragungsglied realisierbar. Dadurch wird die Übertragung von horizontalen Kräften auf den Sattelauflieger beim Unterfahren vermieden, d.h. der Sattelauflieger wird nicht parallel zur Fahrbahn und in Bewegungsrichtung der rückwärts fahrenden Sattelzugmaschine verschoben. Es wird also effektiv eine Bremswirkung auf den Sattelauflieger beim Unterfahren erzielt. Die Synchronisation der Räder mit Fahrbahnkontakt und Aufliegerkontakt kann insbesondere mechanisch oder hydraulisch erfolgen.

Eine andere vorteilhafte Weiterbildung sieht vor, dass die untere Stützeinrichtung weiter hinten an der Sattelzugmaschine positioniert ist als die obere Stützeinrichtung. Dies sichert die Sattelzugmaschine zusätzlich gegen ein Kippen im angehobenen Zustand bzw. beim Anheben des Sattelaufliegers, wenn der Lastangriff hinter der Hinterachse (als potentieller Drehachse / Kippachse) der Sattelzugmaschine erfolgt.

Schließlich ist in Ausgestaltung der vorliegenden Erfindung in einer Weiterbildung vorgesehen, dass die Hubeinrichtung dazu ausgestaltet ist, Sattelauflieger, die auf einem Auto-Trestle montiert sind, zu untergreifen und die Unterkante des Auto-Trestles mindestens auf die Höhe der Sattelplatte anzuheben. Der Auto-Trestle verringert die Unterfahrhöhe der Einheit von Auto-Trestle und Sattelauflieger beim Ankuppeln auf eine Sattelzugmaschine. Durch einen erfindungsgemäßen, zusätzlichen Hubweg wird die Zugmaschine universell einsetzbar und insbesondere für den Umschlag von mit Auto-Trestles versehenen Megatrailern, wie er in Seehäfen üblich ist, geeignet. Herkömmliche Zugmaschinen für Megatrailer sind nicht dazu in der Lage, mit Auto-Trestles versehene Megatrailer zu handhaben, insbesondere zu unterfahren.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigt:
- **Fig. 1**: eine erfindungsgemäße Sattelzugmaschine mit einer Hubeinrichtung in schematischer Seitenansicht;
- **Fig. 2**: eine erfindungsgemäße Sattelzugmaschine mit einer Hubeinrichtung in schematischer Draufsicht;
- **Fig. 3a-3e**: verschiedene Stadien beim Ankuppeln eines Sattelaufliegers mit einer erfindungsgemäßen Sattelzugmaschine in schematischer Seitenansicht.

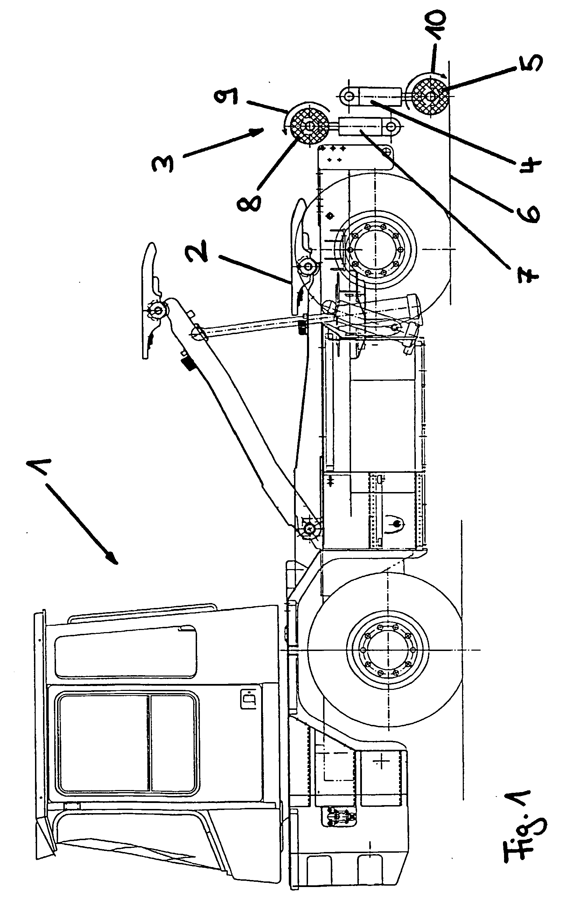

In **Figur 1** ist eine Ausführungsform einer erfindungsgemäßen Sattelzugmaschine **1** dargestellt, die zum Ankuppeln von Sattelaufliegern geeignet ist, deren Unterfahrhöhe kleiner ist als die Höhe einer Sattelplatte **2** der Sattelzugmaschine **1**.

Zum Aufsatteln wird die Sattelzugmaschine 1 auf etwa eine Linie mit dem abgestellten Sattelauflieger (nicht dargestellt in Figur 1) gebracht. Die Sattelzugmaschine 1, deren rückwärtige Hubeinrichtung **3** sich im eingefahrenen Zustand (Ausgangs- oder Ruhezustand) befindet, wird sodann rückwärts auf die Vorderseite des Sattelaufliegers zu verfahren, bis die Hubeinrichtung 3 sich unterhalb des vorderen Bereichs des Sattelaufliegers befindet. Die Hubeinrichtung 3 ist so tief an der Sattelzugmaschine 1 angebracht, dass problemlos alle gängigen Typen von Sattelaufliegern, insbesondere Megatrailer, untergriffen werden können.

Dann wird eine untere Stützeinrichtung **4** funktionsbereit gemacht, indem ein unteres Übertragungsglied **5** nach unten gefahren und so in Kontakt mit einer Fahrbahn **6** gebracht wird. Dessen horizontale Position wird sodann fixiert. Das untere Übertragungsglied 5 ist als Räderpaar ausgebildet. Vereinfacht gesprochen werden also die hinteren Stützräder ausgefahren.

Anschließend wird eine obere Stützeinrichtung **7** in Position gebracht, indem ein oberes Übertragungsglied **8** nach oben gefahren wird, bis es eine Auflagefläche im vorderen Bereich des Sattelaufliegers von unten berührt. Mit weiterem Hub des oberen Übertragungsgliedes 8 wird der Sattelauflieger (bzw. dessen Auflagefläche im vorderen Bereich) bis auf die Höhe der Sattelplatte 2 angehoben. Diese horizontale Position des oberen Übertragungsgliedes 8 wird ebenfalls fixiert. Das obere Übertragungsglied 8 ist als Räderpaar ausgebildet. Grob vereinfacht werden also die vorderen Stützräder ausgefahren und der Sattelauflieger angehoben.

Sodann fährt die Sattelzugmaschine 1 so weit rückwärts, bis die Ankuppelvorrichtung des Sattelaufliegers und die Kupplungsvorrichtung der Sattelzugmaschine 1 ineinander greifen. Dabei werden die Räder des oberen Übertragungsgliedes 8 in Pfeilrichtung **9**, also gegen den Uhrzeigersinn, an der Unterseite des Sattelaufliegers abgerollt. Die Räder des unteren Übertragungsgliedes 5 werden in Pfeilrichtung **10**, also im Uhrzeigersinn, auf der Oberfläche der Fahrbahn 6 abgerollt. Die Räder des oberen Übertragungsgliedes 8 und des unteren Übertragungsgliedes 5 besitzen identischen Durchmesser und sind erfindungsgemäß so synchronisiert, dass deren Winkelgeschwindigkeiten betragsmäßig identisch, aber mit anderem Vorzeichen eingestellt sind. Dadurch wird gewährleistet, dass die Abrollwege der Räder des oberen Übertragungsgliedes 8 und des unteren Übertragungsgliedes 5 identisch sind und sich somit der Sattelauflieger aufgrund des Kupplungsvorgangs, und insbesondere aufgrund des Unterfahrens, nicht bewegt und somit relativ zur Fahrbahn 6 in Ruhe bleibt. Sobald die Auflagefläche des Sattelaufliegers mit der Sattelplatte 2 der Zugmaschine 1 in Kontakt kommt, wird ein Teil der Stützlast von der Hubeinrichtung 3 auf die Sattelplatte 2 übertragen.

Nachdem der Sattelauflieger die gewünschte horizontale Position erreicht hat, kann der Königszapfen des Sattelaufliegers in seiner horizontalen Position an der Sattelzugmaschine 1 gesichert werden. Im Regelfall werden danach nacheinander die obere Stützeinrichtung 7 und die untere Stützeinrichtung 4 zurück in den Grundzustand verfahren, d.h. die Stützräder werden wieder eingefahren. Mit dem Einfahren der oberen Stützeinrichtung 7 erfolgt der volle Lastübertrag auf die Sattelplatte 2. Danach ist die Sattelzugmaschine 1 samt Sattelauflieger fahrbereit.

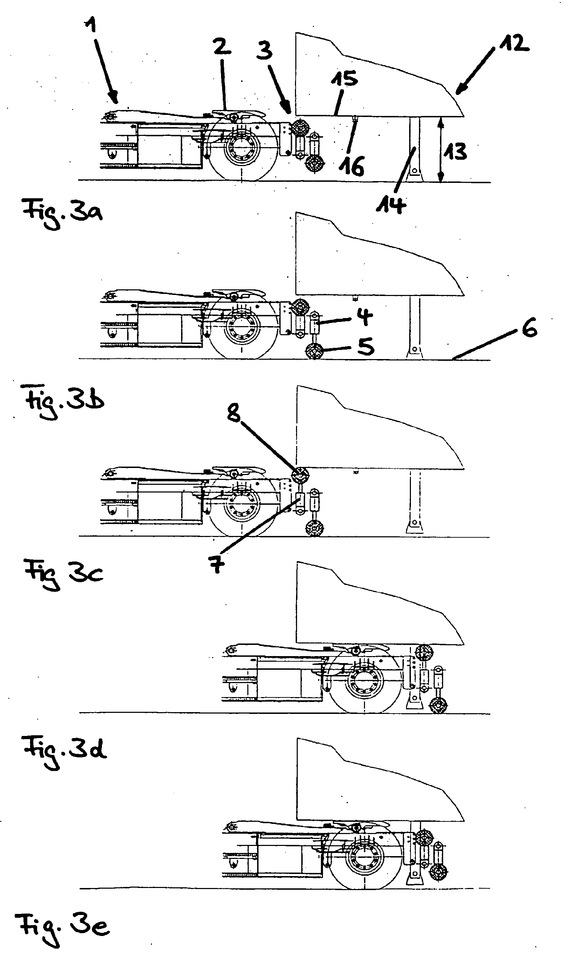

Zum Absatteln wird zunächst ein etwaiger Kupplungsmechanismus zwischen Sattelauflieger und Sattelzugmaschine 1 gelöst (d.h. der Königszapfen wird entsichert) und das untere Übertragungsglied 5 (die hinteren Stützräder) wird ausgefahren. Dann wird das obere Übertragungsglied 8 (d.h. die vorderen Stützräder) bis auf die Höhe der Sattelplatte 2 ausgefahren Anschließend fährt die Sattelzugmaschine 1 eine geringe Strecke vorwärts, bis der Sattelauflieger nur noch auf der Hubeinrichtung 3 aufliegt. Danach erfolgt das Einziehen des oberen Übertragungsgliedes 8 (Einfahren der vorderen Stützräder), wobei der Sattelauflieger auf integrierte Stützen des Sattelaufliegers (vgl. Figur 3) abgesetzt wird, und anschließend das Einziehen der unteren Übertragungsglieder 5. Damit ist die Sattelzugmaschine 1 unbesattelt und kann zur weiteren Verwendung verfahren werden.

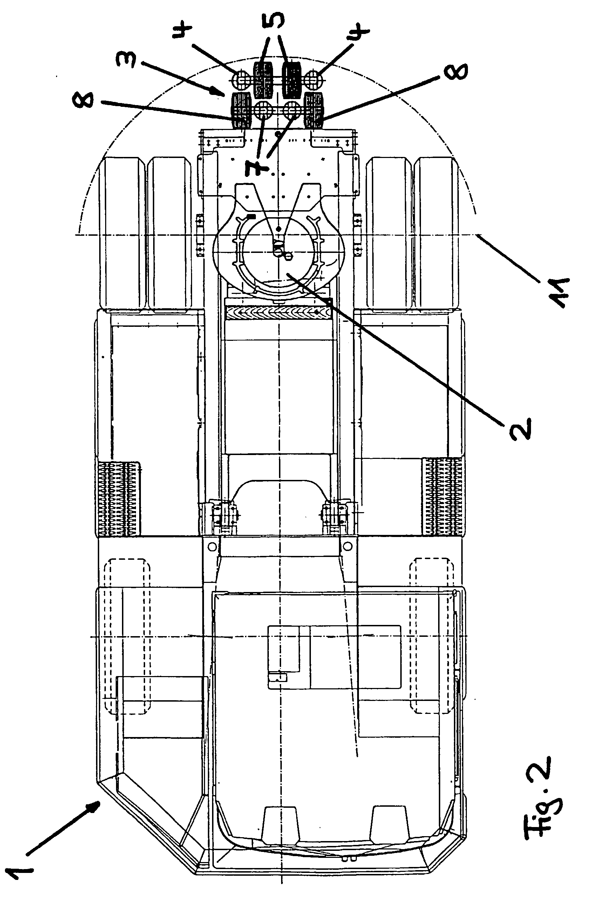

**Figur 2** zeigt eine schematische Ansicht der Sattelzugmaschine 1 in Draufsicht. Die Hubeinrichtung 3 umfasst eine obere Stützeinrichtung 7, deren oberes Übertragungsglied 8, das horizontal verfahrbar ist, als Paar von zwei Rädern ausgebildet ist. Die untere Stützvorrichtung 4 weist ein unteres Übertragungsglied 5 auf, das horizontal verfahrbar ist und ebenfalls als Paar von Rädern ausgebildet ist. Alle Räder der Hubeinrichtung 3 besitzen in der gezeigten Ausführungsform gleichen Durchmesser und weisen einen hohen Reibschlussbeiwert für guten Halt längs ihres Abrollweges auf.

Beim Heben des Sattelaufliegers durch die obere Stützeinrichtung 7 erfolgt der Lastangriff deutlich horizontal beabstandet von der Position einer Hinterachse **11** der Sattelzugmaschine 1. Dadurch wird ein Drehmoment an die Sattelzugmaschine 1 angelegt, mit der Hinterachse 11 als Drehachse. Bei den zu erwartenden Stützlasten von Sattelaufliegern besteht dann die Gefahr eines Kippens der Sattelzugmaschine 1, wobei das Heck abgesenkt und die Front der Sattelzugmaschine 1 angehoben wird. Dieses Drehmoment wird in der dargestellten erfindungsgemäßen Ausführungsform durch die untere Stützeinrichtung 4 neutralisiert, die den Großteil der Stützlast auf die Fahrbahn 6 überträgt und die Sattelzugmaschine 1 somit sichert.

Die **Figuren 3a bis 3e** zeigen den Ablauf eines Ankuppelvorgangs eines Sattelaufliegers **12** mit einer erfindungsgemäßen Sattelzugmaschine 1. Vom Sattelauflieger **12** ist jeweils nur ein vorderer Teil, von der Sattelzugmaschine 1 jeweils nur ein hinterer Teil in den Figuren 3a bis 3e dargestellt.

In **Figur 3a** ist die Sattelzugmaschine 1 im Ausgangszustand so orientiert, dass die im eingefahrenen Zustand befindliche Hubeinrichtung 3 vom Sattelauflieger 12 überragt wird. Die Unterfahrhöhe **13** des Sattelaufliegers 12 ist geringer als die Höhe der Sattelplatte 2. Der Sattelauflieger wird durch eine Stützkonstruktion **14** gestützt. Der Sattelauflieger 12 besitzt außerdem im Bereich einer Auflagefläche **15** einen Königszapfen **16**.

Nun erfolgt das Ausfahren des unteren Übertragungsgliedes 5 der unteren Stützeinrichtung 4, bis das untere Übertragungsglied Kontakt zur Fahrbahn 6 hat. Diese Position ist dargestellt in **Figur 3b**.

Im Anschluss daran erfolgt das Ausfahren des oberen Übertragungsglieds 8 der oberen Stützeinrichtung 7. Nach Kontakt des oberen Übertragungsgliedes 8 mit der Auflagefläche 15 bewirkt ein weiterer Hub ein Anheben des Sattelaufliegers 12 in seinem vorderen Bereich. Der gewünschte Hub ist erreicht, wenn die Auflagefläche 15 sich auf gleicher Höhe mit der Sattelplatte 2 befindet. Diese Position ist in **Figur 3c** dargestellt.

Bei unverändertem Hub der Hubeinrichtung 3 verfährt nun die Sattelzugmaschine 1 nach rechts auf den Sattelauflieger 12 zu, bis der Königszapfen 16 in einer vorgesehenen Aussparung der Sattelplatte 2 angelangt ist. In dieser Stellung, dargestellt in **Figur 3d**, wird der Königszapfeh 16 gesichert.

Daraufhin werden zunächst die obere Stützeinrichtung 7 bzw. das obere Übertragungsglied 8 und danach die untere Stützeinrichtung 4 bzw. das untere Übertragungsglied 5 wieder eingefahren. Der Sattelauflieger 12 ruht nunmehr auf der Sattelplatte 2 der Sattelzugmaschine 1, was in **Figur 3e** dargestellt ist. Der Sattelauflieger 12 kann nun mit der Sattelzugmaschine 1 bewegt werden.

### BEZUGSZEICHEN

- 1: Sattelzugmaschine
- 2: Sattelplatte
- 3: Hubeinrichtung
- 4: untere Stützeinrichtung
- 5: unteres Übertragungsglied
- 6: Fahrbahn
- 7: obere Stützeinrichtung
- 8: oberes Übertragungsglied
- 9: Abrollrichtung des oberen Übertragungsgliedes beim Unterfahren
- 10: Abrollrichtung des unteren Übertragungsgliedes beim Unterfahren
- 11: Hinterachse
- 12: Sattelauflieger
- 13: Unterfahrhöhe
- 14: Stützkonstruktion
- 15: Auflagefläche
- 16: Königszapfen

## Patentansprüche

1. Sattelzugmaschine (1) mit einer Sattelplatte (2) zum Ankuppeln eines Sattelaufliegers (12), **dadurch gekennzeichnet, dass** an der Rückseite der Sattelzugmaschine (1) eine Hubeinrichtung (3) zum Anheben des Sattelaufliegers (12) angebracht ist.

2. Sattelzugmaschine (1) nach Anspruch 1, **dadurch gekennzeichnet, dass** die Hubeinrichtung (3) eine obere Stützeinrichtung (7) mit einem beweglich gelagerten oberen Übertragungsglied (8) zum Kontakt mit der Unterseite (15) des Sattelaufliegers (12) aufweist.

3. Sattelzugmaschine (1) nach Anspruch 1 oder 2, **dadurch gekennzeichnet, dass** die Hubeinrichtung (3) eine untere Stützeinrichtung (4) mit einem beweglich gelagerten unteren Übertragungsglied (5) zum Kontakt mit der Fahrbahn (6) aufweist.

4. Sattelzugmaschine (1) nach Anspruch 2 oder 3, **dadurch gekennzeichnet, dass** das obere und/oder das untere Übertragungsglied (8, 5) durch eine Rolle oder ein Rad ausgebildet sind.

5. Sattelzugmaschine (1) nach Anspruch 2 und 3, **dadurch gekennzeichnet, dass** die Bewegung der Übertragungsglieder (8, 5) der oberen und der unteren Stützeinrichtung (7, 4) synchronisiert ist.

6. Sattelzugmaschine (1) nach einem der Ansprüche 3 bis 5, **dadurch gekennzeichnet, dass** die untere Stützeinrichtung (4) weiter hinten an der Sattelzugmaschine (1) positioniert ist als die obere Stützeinrichtung (7).

7. Sattelzugmaschine (1) nach einem der Ansprüche 3 bis 6, **dadurch gekennzeichnet, dass** die Hubeinrichtung (3) dazu ausgestaltet ist, Sattelauflieger (12), die auf einem Auto-Trestle montiert sind, zu untergreifen und die Unterkante des Auto-Trestles mindestens auf die Höhe der Sattelplatte (2) anzuheben.

## Claims

1. Tractor trailer (1) comprising a trailer plate (2) for coupling to a semi-trailer (12), **characterized in that** a lifting means (3) is provided on the rear side of the tractor trailer (1) for lifting the semi-trailer (12).

2. Tractor trailer (1) according to claim 1, **characterized in that** the lifting means (3) comprises an upper support means (7) having a movably disposed, upper transfer member (8) for contacting the lower side (15) of the semi-trailer (12).

3. Tractor trailer (1) according to claim 1 or 2, **characterized in that** the lifting means (3) comprises a lower support means (4) having a movably disposed, lower transfer member (5) for contacting the road (6).

4. Tractor trailer (1) according to claim 2 or 3, **characterized in that** the upper and/or lower transfer member (8, 5) is/are formed by a roll or a wheel.

5. Tractor trailer (1) according to claims 2 and 3, **characterized in that** the motion of the transfer members (8, 5) of the upper and lower support means (7, 4) is synchronized.

6. Tractor trailer (1) according to any one of the claims 3 through 5, **characterized in that** the lower support means (4) is positioned on the tractor trailer (1) at a location closer to the rear than the upper support means (7).

7. Tractor trailer (1) according to any one of the claims 3 through 6, **characterized in that** the lifting means (3) is designed to grasp below semitrailers (12) mounted to a vehicle trestle, and to lift the lower edge of the vehicle trestle to at least the height of the trailer plate (2).

## Revendications

1. Tracteur de semi-remorque (1) avec une plaque de sellette (2) pour l'attelage d'une remorque (12), **caractérisé en ce qu'**un dispositif de levée (3) est installé à l'arrière du tracteur de semi-remorque (1) pour la levée de la remorque (12).

2. Tracteur de semi-remorque (1) selon la revendication 1, **caractérisé en ce que** le dispositif de levée (3) présente un dispositif de support supérieur (7) doté d'un élément de transmission (8) supérieur mobile pour la prise de contact avec le dessous (15) de la remorque (12).

3. Tracteur de semi-remorque (1) selon la revendication 1 ou 2, **caractérisé en ce que** le dispositif de levée (3) présente un dispositif de support inférieur (4) avec un élément de transmission (5) inférieur mobile pour la prise de contact avec la bande de circulation (6).

4. Tracteur de semi-remorque (1) selon la revendication 2 ou 3, **caractérisé en ce que** l'élément supérieur et/ou inférieur de transmission (8, 5) est configuré comme un galet ou une roue.

5. Tracteur de semi-remorque (1) selon la revendication 2 et 3, **caractérisé en ce que** le mouvement des éléments de transmission (8, 5) du dispositif supérieur ou inférieur de support (7, 4) est synchronisé.

6. Tracteur de semi-remorque (1) selon l'une des revendication 3 à 5, **caractérisé en ce que** le dispositif inférieur de support (4) est positionné sur le tracteur de semi-remorque (1) plus en arrière que le dispositif de support supérieur (7).

7. Tracteur de semi-remorque (1) selon l'une des revendications 3 à 6, **caractérisé en ce que** le dispositif de levée (3) est configuré de façon à accrocher les remorques (12), montées sur une béquille automatique, par le dessous et à élever le bord inférieur de la béquille automatique au moins à hauteur de la plaque de sellette (2).
